# EUROPÄISCHE PATENTSCHRIFT

(11) **EP 1 998 965 B1**
(45) Veröffentlichungstag und Bekanntmachung des Hinweises auf die Patenterteilung: **06.01.2010**
(21) Anmeldenummer: 07723236.1
(22) Anmeldetag: 14.03.2007
(51) Int. Cl.: B60D 1/62, B62D 53/12

(54) **STECKERKONSOLE**
CONNECTOR BRACKET
BOÎTIER DE CONNEXION

(30) Priorität: 15.03.2006 DE 102006012800
(43) Veröffentlichungstag der Anmeldung: 10.12.2008
(73) Patentinhaber: Jost-Werke GmbH, 63263 Neu-Isenburg (DE)
(72) Erfinder: ALGÜERA, José, 63739 Aschaffenburg (DE)
(74) Vertreter: Mehler, Klaus
(86) Internationale Anmeldenummer: PCT/EP2007/002226
(87) Internationale Veröffentlichungsnummer: WO 2007/104544

(56) Entgegenhaltungen:
- EP-A- 1 147 973
- WO-A-2006/066819
- DE-A1- 4 142 317
- DE-A1-102004 044 991
- US-A- 3 888 513
- US-A- 5 346 239

## Beschreibung

Die Erfindung betrifft einen Kupplungsassistenten zum Verbinden mindestens einer Versorgungsleitung zwischen einem ersten und einem über eine Kupplung daran ankuppelbaren zweiten Fahrzeug, umfassend eine an dem zweiten Fahrzeug angeordnete Versorgungskonsole zum Anstecken der mindestens einen Versorgungsleitung, welche mittels eines Antriebs aus einer in der Fahrzeuglängsachse befindlichen Fahrstellung in eine seitlich dazu befindliche Bedienstellung verfahrbar ist.

In der Praxis wird üblicherweise ein erstes Fahrzeug an ein zweites Fahrzeug herangefahren und ein Kupplungsmittel des zweiten Fahrzeugs in Wirkeingriff mit einer auf dem ersten Fahrzeug angeordneten Kupplung gebracht und darin verriegelt. Bei den ersten und zweiten Fahrzeugen kann es sich beispielsweise um ein Zugfahrzeug und einen Auflieger oder einen Anhänger handeln. Nach dem mechanischen Verbinden von erstem und zweitem Fahrzeug werden üblicherweise die Versorgungsleitungen des ersten Fahrzeugs an entsprechende Anschlüsse des zweiten Fahrzeugs angesteckt, die in einer Versorgungskonsole untergebracht sind. Bei den Versorgungsleitungen handelt es sich sowohl um Kabel für eine elektrische als auch um Druckluftschläuche für eine pneumatische Verbindung von erstem und zweitem Fahrzeug. In besonderen Fällen kann unter dem Oberbegriff Versorgungsleitung auch eine hydraulische Schlauchverbindung verstanden werden.

Auf dem ersten Fahrzeug befindet sich eine Ablagekonsole, an welche bei Leerfahrten der oder die Stecker angesteckt werden können. In räumlicher Nähe zu der Ablagekonsole oder durch die Ablagekonsole selbst sind die Versorgungsleitungen mit dem Zugfahrzeug verbunden. Damit während des Ausschwenkens des vorderen Endes des zweiten Fahrzeugs bei Kurvenfahrten zu beiden Seiten ein in etwa gleicher Vorrat der Versorgungsleitungen bereitsteht, wobei die Versorgungsleitungen üblicherweise als Spiralkabel gefertigt sind, befindet sich die Ablagekonsole meistens in der Fahrzeuglängsachse.

Das Anstecken der Verbindungsleitung(en) an die Versorgungskonsole des zweiten Fahrzeugs erfolgt durch den Fahrer von Hand. Hierzu muss der Fahrer insbesondere bei Sattelzügen auf das Zugfahrzeug in den freien Bauraum zwischen Auflieger und Fahrerhaus klettern, den Stecker aus der Ablagekonsole entnehmen und an die Versorgungskonsole anschließen. Vor dem Abkuppeln des Aufliegers von dem Zugfahrzeug erfolgt die gleiche Prozedur in umgekehrter Reihenfolge.

Der wesentliche Nachteil besteht in dem hohen Verletzungsrisiko während des Besteigens der Zugmaschine. Um einen Anreiz für die Spediteure zu schaffen, dieses Verletzungsrisiko zu senken, stellen Berufsgenossenschaften, wie beispielsweise die französische CRAM, verbilligte Prämien für Fahrzeuge bereit, auf denen Bewegungen des Fahrers an dem Fahrzeug verringert werden. Darüber hinaus ist jedoch der Bauraum zwischen erstem und zweitem Fahrzeug häufig dreckig und nass, so dass der Fahrer nach den Kuppelvorgängen oft verschmutzte und feuchte Kleidung wechseln muss.

Aus diesem Grund sind bereits Kupplungssysteme beispielsweise aus der gattungsbildenden DE 10 2004 044 991 A1 oder der EP 0 853 033 B1 bekannt geworden, bei denen die Versorgungskonsole aus einer im Bereich der Fahrzeuglängsachse befindlichen Fahrstellung in eine an der Seite des Fahrzeugs liegende Bedienstellung verfahren werden kann. Der Fahrer ist dann in der Lage, in der Bedienstellung seitlich neben den Fahrzeugen stehend, von Hand die Versorgungsleitungen anzustecken und nachfolgend vor Fahrtantritt die Versorgungskonsole in die mittige Position zurückzufahren.

Der Erfindung liegt nunmehr die Aufgabe zugrunde, dieses bekannte Kupplungssystem für Versorgungsleitungen derart weiterzubilden, dass ein noch schnelleres und komfortableres Ankuppeln der Versorgungsleitungen möglich ist.

Die Aufgabe wird erfindungsgemäß dadurch gelöst, dass an der Kupplung mindestens ein erster Sensor zur Detektion des Verschlusszustandes angeordnet und das Verfahren der Versorgungskonsole von einem Signal des ersten Sensors ausgelöst ist. Zum Ankuppeln des zweiten Fahrzeugs nähert sich das erste Fahrzeug rückwärts dem stehenden zweiten Fahrzeug an. Die Kupplung befindet sich üblicherweise in einer einfahrbereiten geöffneten Stellung. Bei einer Sattelkupplung ändert sich der Kupplungszustand mit dem Einfahren des Kupplungsmittels, hier ein Königszapfen, in die Kupplung von einer Öffnungsstellung in die Verschlussstellung. Diese Veränderung wird von dem ersten Sensor erfasst und ein automatisiertes Verfahren der Versorgungskonsole ausgelöst. Für das Verfahren der Versorgungskonsole ist diese mit einem eigenen Antrieb versehen, wobei der Antrieb auch ein Federelement sein kann, welches durch das Signal des ersten Sensors entriegelt und dadurch in die Bedienstellung verfahren wird. Die Signalübertragung zwischen dem Sensor und dem Antrieb der Versorgungskonsole erfolgt bei noch nicht aneinander gekuppelten Fahrzeugen berührungslos, beispielsweise per Funk, Blue Tooth, Infrarot, Ultraschall oder anderen, dem Fachmann bekannten Verfahren. Der Fahrer kann nach dem Herstellen der mechanischen Verbindung zwischen dem ersten und zweiten Fahrzeug unmittelbar mit dem Anschließen der Versorgungsleitungen an der bereits in die Bedienstellung ausgefahrene Versorgungskonsole beginnen. Der Verschlusszustand bietet sich deshalb an, da erst nach einem erfolgreichen Ankuppeln des zweiten Fahrzeugs die Versorgungskonsole in die Bedienstellung verfahren werden soll.

In einer bevorzugten Ausführungsform ist der erste Sensor in oder in räumlicher Nähe zu einer Sattelkupplung des ersten Fahrzeugs angeordnet. Dabei kann der erste Sensor die Annäherung und/oder den Kontakt eines Königszapfens des zweiten Fahrzeugs mit der Sattelkupplung detektieren. Das Verfahren der Versorgungskonsole ist bei dieser Ausführungsform abhängig von einem Vorhandensein des Königszapfens im Wirkbereich des an der Sattelkupplung befindlichen ersten Sensors.

Alternativ oder in Ergänzung hierzu kann der erste Sensor auch die Stellung einer Verschlussmechanik der Sattelkupplung detektieren, das heißt, nicht unmittelbar den Königszapfen, sondern die Lageänderung einzelner Bauteile der Verschlussmechanik nach dem Einfahren und automatischen Verriegeln des Königszapfens. Diese Ausführungsform hat den Vorteil, dass zum Abkuppeln des zweiten Fahrzeugs von dem Fahrer die Verschlussmechanik aus der geschlossenen Stellung in eine Öffnungsstellung gebracht und diese Veränderung bei einem Detektieren der Verschlussmechanik ebenfalls von dem ersten Sensor erfasst wird. Dadurch kann auch beim Abkuppeln ein automatisiertes Verfahren der Versorgungskonsole in die Bedienstellung erfolgen.

Vorteilhafterweise ist die Fahrstellung und/oder Bedienstellung der Versorgungskonsole über mindestens einen Positionssensor detektiert.

Mit Hilfe dieses weiteren Sensors ist es möglich, dem Fahrer nach dem Ankuppeln des zweiten Fahrzeugs an das erste Fahrzeug die Stellung der Verscrgungskonsoie beispielsweise in dem Fahrerhaus anzuzeigen und gegebenenfalls auch ein Losfahren bei einer versehentlich in der Bedienstellung verbliebenen Versorgungskonsole durch eine Anbindung an die Fahrzeugelektronik zu verhindern.

Gemäß einer günstigen Ausführungsform ist auf dem ersten Fahrzeug ein zweiter Sensor angeordnet, welcher die Annäherung und/oder den Kontakt der Sattelkupplung mit einer Aufliegerplatte eines Aufliegers detektiert. Hierdurch lässt sich auf das Vorhandensein eines zweiten Fahrzeugs schließen, so dass eine Plausibilitätsprüfung bezüglich des Signals des ersten Sensors beispielsweise bei einem zu hoch eingefahrenen Königszapfen durchgeführt werden kann. Bei einem ordnungsgemäß eingefahrenen Königszapfen bewirkt die Auflast der Aufliegerplatte auf die Sattelkupplung ein Signal des zweiten Sensors.

Vorzugsweise ist der Verbindungszustand der mindestens einen Versorgungsleitung mit einem dritten Sensor detektiert. Hierdurch lässt sich überprüfen, ob der Fahrer in die ausgefahrene Versorgungskonsole auch alle Versorgungsleitungen angeschlossen hat. Sollte dies nicht der Fall sein, kann dieses im Fahrerhaus angezeigt und gegebenenfalls ein Losfahren des ersten Fahrzeugs durch eine Einflussnahme auf die Fahrzeugelektronik verhindert werden.

Sofern das erste Fahrzeug mindestens einen motorisch verfahrbaren Windabweiser aufweist, kann dessen Stellung mit einem vierten Sensor detektiert sein. Derartige Windabweiser befinden sich häufig auf dem Dach aber auch seitlich neben dem ersten Fahrzeug. Während des Ankuppelns eines Aufliegers sollte die Position des Windabweisers erfasst werden und gegebenenfalls bei Vorliegen eines Signals des ersten Sensors eine Inbetriebnahme des Motors stattfinden, um den Windabweiser aus dem Einwirkungsbereich der in die Bedienstellung ausfahrenden Versorgungskonsole zu bringen, um nicht den Windabweiser und/oder die Versorgungskonsole zu beschädigen.

Es hat sich als günstig erwiesen, wenn das erste Fahrzeug eine Ablagekonsole zum Anstecken der mindestens einen Versorgungsleitung aufweist und diese Ablagekonsole mit einem fünften Sensor detektiert ist. Hierdurch wird erkannt, ob die Versorgungsleitungen nach dem Abkuppeln wie vorgesehen in der Ablagekonsole eingehängt sind. Andernfalls besteht die Gefahr, dass das erste Fahrzeug nach der mechanischen Trennung von dem zweiten Fahrzeug mit einer in die Versorgungskonsole eingesteckten Verbindungsleitung vorgefahren wird und es zu einem Abreißen der Versorgungsleitung kommt. Ebenso ist es möglich zu sensieren, ob die mindestens eine Versorgungsleitung an die Ablagekonsole angesteckt ist oder unkontrolliert von dem ersten Fahrzeug herabhängt und möglicherweise beschädigt wird.

Insbesondere Auflieger eines Sattelzuges weisen üblicherweise Stützwinden auf, deren Ausfahrzustand mit einem sechsten Sensor detektiert sein kann.

Eine auf einem ersten Fahrzeug angeordnete Sattelkupplung kann darüber hinaus auf einer Verschiebeeinrichtung angeordnet sein. Hierbei sollte die Position der Sattelkupplung auf der Verschiebeeinrichtung mit einem siebten Sensor detektiert sein.

Gemäß einer vorteilhaften Ausgestaltung ist mindestens einer der vorstehend beschrieben Sensoren mit einer Anzeigevorrichtung verbunden ist, welche vorzugsweise in einem Fahrerhaus des ersten Fahrzeugs angeordnet ist. In dieser einfachen Ausführungsform wird dem Fahrer in dem Fahrerhaus eine gegebenenfalls nicht ordnungsgemäße Position der jeweiligen Komponente angezeigt.

Die Sensoren können mit einem induktiven, magnetischen oder Ultraschall-Wirkprinzip arbeiten. Ebenso ist es möglich, optische Sensoren einzusetzen.

Günstigerweise ist auch vorgesehen, auf dem ersten Fahrzeug ein Steuergerät anzuordnen, welches mit mindestens einem der Sensoren verbunden ist und deren jeweiligen Signale verarbeitet. Das Steuergerät kann beispielsweise an einer Sattelkupplung oder deren Unterbau angeordnet sein. Hieraus resultiert der Vorteil, dass auch eine Plausibilitätsprüfung durch das Steuergerät durchgeführt und eine Fehlbedienung durch den Fahrer weitgehend ausgeschlossen werden kann.

Besonders vorteilhaft ist es, wenn das Steuergerät die Stellung des mindestens einen Windabweisers steuert. Das Verfahren des motorisch angetriebenen Windabweisers erfolgt durch das Steuergerät, sobald dieses ein Signal von dem ersten Sensor erhält und bevor ein Verfahren der Verbindungskonsole in die Bedienstellung ausgelöst wird. Hieraus resultiert der Vorteil, dass Beschädigungen des Windabweisers beziehungsweise der Versorgungskonsole nicht mehr auftreten.

Zusätzlich kann das Steuergerät den Ausfahrzustand motorisch angetriebener Stützwinden steuern. Diese müssen nach dem Ankuppeln des zweiten Fahrzeugs an das erste Fahrzeug vor dem Losfahren in eine eingezogene Stellung gebracht werden. Wird ein Einfahren der Stützwinden vergessen, kann das Steuergerät durch Einwirken auf die Fahrzeugelektronik ein Losfahren des ersten Fahrzeugs verhindern. Ebenso kann das Steuergerät verhindern, dass trotz in die Bedienstellung verfahrener Versorgungskonsole vergessen wird, die mindestens eine Versorgungsleitung mit der Versorgungskonsole zu verbinden und anstatt dessen die Stützwinden eingefahren werden. Sollte versehentlich vergessen worden sein, die Feststellbremse zu betätigen, rollen unter Umständen eines oder beide Fahrzeuge unkontrolliert los.

Vorzugsweise steuert das Steuergerät die Position der Sattelkupplung auf der Verschiebeeinrichtung.

Günstigerweise steuert das Steuergerät auch den Antrieb der Versorgungskonsole. Dadurch ist es möglich, unter Einbeziehen der übrigen Sensorsignale zusätzlich zu dem automatischen Ausfahren vor dem Ankuppeln in die Bedienstellung auch ein Zurückfahren der Versorgungskonsole nach dem Anstecken der Versorgungsleitungen in die Fahrstellung zu realisieren. Vor dem Abkuppeln könnte das Steuergerät beispielsweise nach dem Ausfahren der Stützwinden selbsttätig ein Ausfahren der Versorgungskonsole in die Bedienstellung auslösen.

Weiterhin ist es möglich, dass das Steuergerät das Öffnen der Kupplung steuert. Dieses insbesondere dann sinnvoll, wenn das Steuergerät bereits ein Ausfahren der Versorgungskonsole erfasst und zusätzlich ein Signal aus der Fahrzeugelektronik bezüglich des Bremszustandes erhalten hat.

Eine weitere Funktion des Steuergerätes kann darin bestehen, ein Geschwindigkeitssignal des ersten Fahrzeugs zu verarbeiten, das heißt insbesondere ein Losfahren des Fahrzeugs mit ausgefahrener Versorgungskonsole zu vermeiden oder alternativ hierzu, sobald das Steuergerät ein Signal erhält, dass sich das erste Fahrzeug bereits in Bewegung befindet, ein automatisches Verfahren der Versorgungskonsole aus der Bedienstellung in die Fahrstellung auszulösen. Ein Fahren mit einer Versorgungskonsole in Bedienstellung sollte vermieden werden, um nicht in räumlicher Nähe zu dem Fahrzeug stehende Personen zu erfassen oder die über die Fahrzeugkontur überstehende Versorgungskonsole während der Fahrt abzureißen.

Vorteilhafterweise verarbeitet das Steuergerät ein Signal der Bremse des ersten Fahrzeugs und/oder zweiten Fahrzeugs. Ebenso kann das Steuergerät ein Signal an die Bremse des ersten Fahrzeugs und/oder zweiten Fahrzeugs abgeben. Dieses betrifft vor allen Dingen die Problematik des Wegrollens eines nicht durch die Feststellbremse gesicherten zweiten Fahrzeugs nach dem Abkuppeln. In diesen Fällen würde ohne Betätigung der Feststellbremse das Steuergerät bereits kein Ausfahren der Versorgungskonsole ermöglichen, wodurch der Fahrer auf eine Fehlbedienung aufmerksam gemacht würde.

In einer besonders günstigen Ausführungsform verarbeitet das Steuergerät ein Signal der Luftfederung und/oder steuert die Höhe der Luftfederung.

Zum besseren Verständnis wird die Erfindung nachfolgend anhand von vier Figuren näher erläutert. Dabei zeigen die:
- **Fig. 1:**: eine schematische Seitenansicht auf ein erstes und zweites Fahrzeug mit einem erfindungsgemäßen Kupplungsassistenten;
- **Fig. 2:**: eine Draufsicht auf ein erstes Fahrzeug mit Komponenten des Kupplungsassistenten;
- **Fig. 3:**: eine Seitenansicht auf das erste Fahrzeug gemäß Fig. 2 und
- **Fig. 4:**: eine Vorderansicht auf ein zweites Fahrzeug mit verfahrbarer Versorgungskonsole.

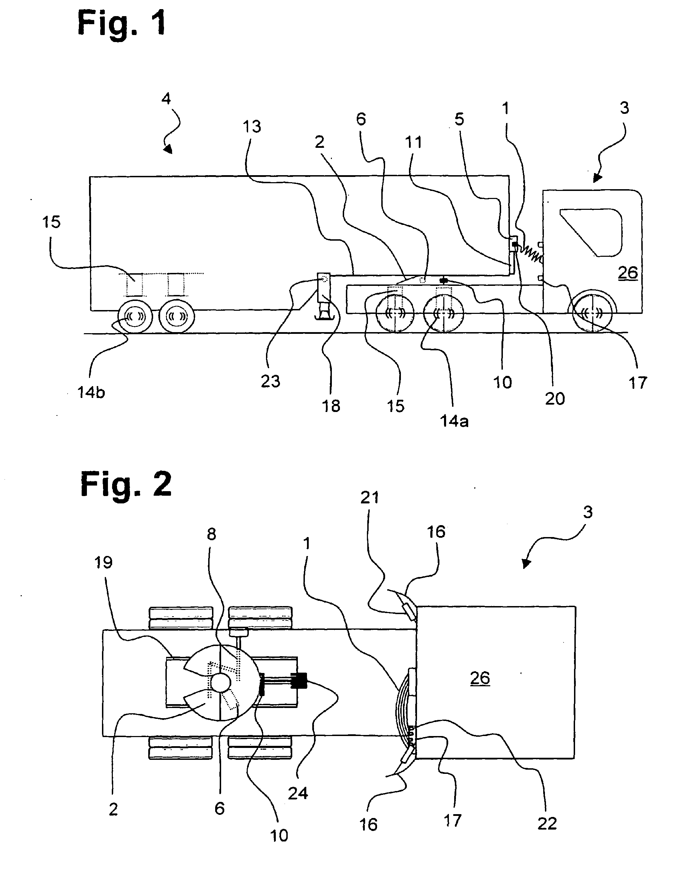

Die Figur 1 zeigt als erstes Fahrzeug 3 ein Zugfahrzeug mit einem daran über eine Kupplung 2 lösbar angekuppelten Auflieger als zweites Fahrzeug 4. Das erste Fahrzeug 3 weist ein Fahrerhaus 26 auf, an dessen Rückseite ortsfest mehrere Versorgungsleitungen 1 heraustreten. In dem gezeigten angekuppelten Zustand beider Fahrzeuge 3, 4 sind die Versorgungsleitungen 1 an eine auf der Vorderseite des Aufliegers 4 angeordnete Versorgungskonsole 5 angesteckt, wodurch der Auflieger 4 mit Druckluft und Elektrizität versorgt ist. Zusätzlich können auch Versorgungsleitungen 1 zum Übertragen von Steuersignalen vorgesehen sein.

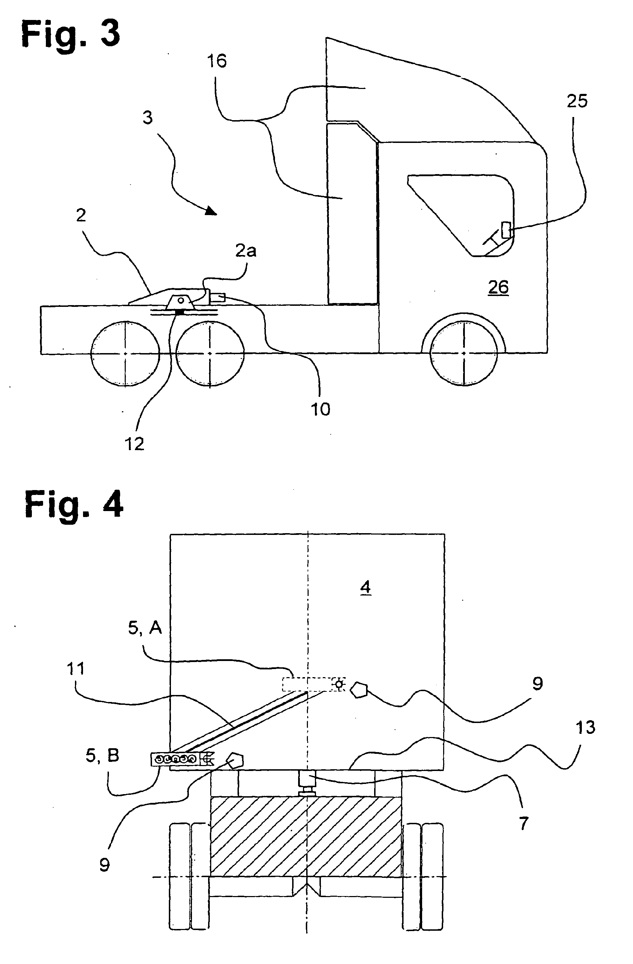

Die Versorgungskonsole 5 kann zum Anstecken und Lösen der Versorgungsleitungen 1 aus einer mittigen Fahrstellung A in eine seitliche Bedienstellung B ausgeschwenkt werden, wie besonders gut in der Figur 4 zu erkennen ist.

Erfindungsgemäß befindet sich an der Kupplung 2 ein erster Sensor 6, welcher den Verriegelungszustand der Verschlussmechanik 8 (siehe Figur 2) überwacht. Nach dem mechanischen Ankuppeln des Aufliegers 4 an das Zugfahrzeug 3 stellt der erste Sensor 6 eine Zustandsänderung der Verschlussmechanik 8 fest und veranlasst ein Ausfahren der Versorgungskonsole 5 in die Bedienstellung B. Anstelle der Verschlussmechanik 8 kann auch ein in die Sattelkupplung 2 eintretender Königszapfen 7 (siehe Figur 4), welcher auf der Unterseite einer Aufliegerplatte 13 angeordnet ist, durch den ersten Sensor 6 erfasst werden. Da die Fahrzeuge 3, 4 noch nicht mechanisch aneinander gekuppelt sind, sollte die Übertragung des Signals des ersten Sensors 6 zum Verfahren der Versorgungskonsole 5 drahtlos, zum Beispiels über Funk, erfolgen.

Die in der Figur 1 dargestellten Fahrzeuge 3, 4 verfügen über mehrere zusätzlich überwachte Fahrzeugkomponenten, deren Signale in einem an der Sattelkupplung 2 angebrachten Steuergerät 10 zusammen mit dem Signal des ersten Sensors 6 verarbeitet werden. In diesen Fällen kann eine drahtlose Verbindung zwischen dem Steuergerät 10 und der Versorgungskonsole 5 vorgesehen sein.

Eine der überwachten Fahrzeugkomponenten sind die nicht näher gezeigten Anschlüsse der Versorgungskonsole 5 über einen dritten Sensor 20. Wenn die Versorgungsleitungen 1 von dem Fahrer in der ausgeschwenkten Bedienstellung B angesteckt sind, ermöglicht das Steuergerät 10 ein automatisiertes Zurückfahren der Versorgungskonsole 5 in die Fahrstellung A. Hierfür wird von dem Steuergerät 10 ein Steuersignal an einen Antrieb 11 der Versorgungskonsole 5 ausgelöst.

An dem Auflieger 4 sind zwei Stützwinden 18 angebracht, von denen in der gezeigten Seitenansicht lediglich die vordere Stützwinde zu erkennen ist. Vor dem mechanischen Trennen des Zugfahrzeugs 3 von dem Auflieger 4 werden die Stützwinden 18 ausgefahren bis sie Bodenkontakt haben und der Auflieger 4 mit seinem vorderen Bereich auf den Stützwinden 18 aufsteht. Nach einem erneuten Ankuppeln des Aufliegers 4 an ein Zugfahrzeug 3 müssen die Stützwinden 18 vor Fahrtantritt eingefahren werden. Der Verfahrzustand der Stützwinden 18 wird über einen sechsten Sensor 23 erkannt, welcher ebenfalls mit dem Steuergerät 10 in Verbindung steht. Hierdurch kann beispielsweise nach dem Erkennen einer sicheren Verriegelung der Verschlussmechanik 8 und gegebenenfalls einem Anstecken der Versorgungsleitungen 1 an die Verbindungskonsole 5 auch ein automatisiertes Einfahren der Stützwinden 18 über einen nicht gezeigten Stützwindenmotor erfolgen.

Eine weitere Erhöhung der Bediensicherheit wird erzielt, wenn zusätzlich Signale der Bremsen 14a, 14b mindestens eines der Fahrzeuge 3, 4 erfasst und als Eingangsignal dem Steuergerät 10 bereitgestellt werden. Das Einbeziehen des Bremssignales in die Auswertung der Eingangsdaten des Steuergerätes 10 kann beispielsweise verhindern, dass die Sattelkupplung 2 geöffnet wird, bevor die Feststellbremse 14b des Aufliegers 4 betätigt wurde, da dieser andernfalls nach dem Öffnen der Kupplung 2 auf einem geneigten Untergrund unkontrolliert wegrollen kann.

Ein besonders komfortables Ankuppeln des Aufliegers 4 an das Zugfahrzeug 3 wird erreicht, wenn nach dem Erkennen einer ordnungsgemäßen Verriegelung der Verschlussmechanik 8 (siehe Figur 2) mit dem Königszapfen 7 des Aufliegers 4 beide Fahrzeuge 3, 4 von der Luftfederung 15 in eine fahrbereite Stellung ohne Eingreifen des Fahrers angehoben werden. Dieses Steuersignal an die Luftfederung 15 kann ebenfalls von dem Steuergerät 10 ausgehen.

In der Figur 2 ist eine Draufsicht auf das erste Fahrzeug 3 dargestellt. Dabei ist zu erkennen, dass seitlich des Fahrerhauses 26 auf beiden Seiten Windabweiser 16 abstehen. Diese Windabweiser 16 müssen zum Anschließen der Versorgungsleitungen 1 herausgeschwenkt werden, so dass ein ausreichender Raum für das Verfahren der Versorgungskonsole 5 in die Bedienstellung B zur Verfügung steht. Dieses Herausschwenken der seitlichen Windabweiser 16 kann motorisch erfolgen. Sofern die jeweilige Stellung des Windabweisers 16 von einem vierten Sensor 21 überwacht ist, kann dieses Signal ebenfalls dem Steuergerät 10 als Eingangssignal zur Verfügung gestellt werden. Damit kann effektiv zuerst ein Herausschwenken der Windabweiser 16 ausgelöst und zeitlich verzögert die Versorgungskonsole 5 in die Bedienstellung B verfahren werden, so dass eine Kollision von Windabweiser 16 und Versorgungskonsole 5 nicht möglich ist.

Die Figur 2 zeigt darüber hinaus eine an der Rückwand des Fahrerhauses 26 befindliche Ablagekonsole 17. Die Ablagekonsole 17 dient der Aufnahme der Versorgungsleitungen 1 beziehungsweise deren endseitig montierten Stecker bei Leerfahrten des ersten Fahrzeugs 3, damit diese nicht unkontrolliert umherschlagen. Das Anstecken der Versorgungsleitungen 1 an die Ablagekonsole 17 wird durch einen an der Ablagekonsole 17 angeordneten fünften Sensor 22 überwacht. Dieser fünfte Sensor 22 kann ebenfalls mit dem Steuergerät 10 zusammenwirken, welches wiederum bei nicht angesteckten Versorgungsleitungen 1 auf die Fahrzeugelektronik einwirkt und beispielsweise ein Lösen der Bremsen 14a, 14b (siehe Figur 1) verhindert.

Das in der Figur 2 dargestellte erste Fahrzeug 3 weist eine Verschiebeeinrichtung 19 auf, welche ein Verschieben der Sattelkupplung 2 ermöglicht. Die Position der Sattelkupplung 2 ist mittels eines siebten Sensors 24 sensierbar, dessen Ausgangssignal in dem Steuergerät 10 berücksichtigt wird. Das Steuergerät 10 veranlasst dann gegebenenfalls ein Ausstellen der Windabweiser 16, sofern diese im Schwenkbereich der Vorderseite des Aufliegers 3 bei einer weit in Richtung Fahrerhaus 26 vorgefahrener Sattelkupplung 2 liegen.

Die Figur 3 zeigt eine Seitenansicht des Zugfahrzeugs 3. Die Sattelkupplung 2 ist auf einem Unterbau 2a gelagert. Durch Anbringen eines zweiten Sensors 12 an der Sattelkupplung 2 oder deren Unterbau 2a ist eine auf der Sattelkupplung 2 aufliegende Last erkennbar und kann ebenfalls in dem Steuergerät 10 verwertet werden.

Die jeweiligen von den Sensoren 6, 9, 12, 20, 21, 22, 23, 24 erfassten Messwerte werden dem Fahrer über eine im Fahrerhaus 26 angeordnete Anzeigevorrichtung 25 angezeigt.

Die Figur 4 stellt einen Auflieger 4 in einer Vorderansicht ohne ein Zugfahrzeug 3 dar, wobei aus Gründen der Übersichtlichkeit die Stützwinden 18 zeichnerisch weggelassen wurden. Auf der Unterseite der Aufliegerplatte 13 ragt in der Fahrzeugmittelachse der Königszapfen 7 hervor, welcher zum Ankuppeln in eine Sattelkupplung 2 eingefahren und in dieser verriegelt wird.

An der Vorderseite des Aufliegers 4 befindet sich die Versorgungskonsole 5, welche zwischen zwei Stellungen A und B verfahrbar ist. Beide Stellungen A, B werden über jeweils einen Positionssensor 9 erfasst und an das Steuergerät 10 (siehe Figuren 1 bis 3) geleitet. Mit Hilfe dieser Information ist es insbesondere möglich, die Versorgungskonsole 5 über den in der Figur 4 als Linearantrieb ausgebildeten Antrieb 11 nach einem Anstecken der Versorgungsleitungen 1 automatisiert in die Fahrstellung A zurückzubringen und dadurch ein Losfahren mit versehentlich in Bedienstellung B befindlicher Versorgungskonsole 5 auszuschließen. Die logische Verknüpfung des Signals des Positionssensors 9 erfolgt über das Steuergerät 10.

### Bezugszeichenliste

- 1: Versorgungsleitung
- 2: Kupplung, Sattelkupplung
- 2a: Unterbau Sattelkupplung
- 3: erstes Fahrzeug, Zugfahrzeug
- 4: zweites Fahrzeug, Auflieger
- 5: Versorgungskonsole
- 6: erster Sensor
- 7: Königszapfen
- 8: Verschlussmechanik Sattelkupplung
- 9: Positionssensor
- 10: Steuergerät
- 11: Antrieb Versorgungskonsole
- 12: zweiter Sensor
- 13: Aufliegerplatte
- 14a: Bremse erstes Fahrzeug
- 14b: Bremse zweites Fahrzeug
- 15: Luftfederung
- 16: Windabweiser
- 17: Ablagekonsole
- 18: Stützwinden
- 19: Verschiebeeinrichtung
- 20: dritter Sensor (Verbindungszustand Versorgungsleitung)
- 21: vierter Sensor (Stellung Windabweiser)
- 22: fünfter Sensor (Ablagekonsole)
- 23: sechster Sensor (Ausfahrzustand Stützwinden)
- 24: siebter Sensor (Position Verschiebeeinrichtung)
- 25: Anzeigevorrichtung
- 26: Fahrerhaus
- A: Fahrstellung
- B: Bedienstellung

## Patentansprüche

1. Kupplungsassistent zum Verbinden mindestens einer Versorgungsleitung (1) zwischen einem ersten und einem über eine Kupplung (2) daran ankuppelbaren zweiten Fahrzeug (3, 4), umfassend eine an dem zweiten Fahrzeug (4) angeordnete Versorgungskonsole (5) zum Anstecken der mindestens einen Versorgungsleitung (1), welche Versorgungskonsole (5) mittels eines Antriebs (11) aus einer in der Fahrzeuglängsachse befindlichen Fahrstellung (A) in eine seitlich dazu befindliche Bedienstellung (B) verfahrbar ist,
**dadurch gekennzeichnet,**
**dass** an der Kupplung (2) mindestens ein erster Sensor (6) zur Detektion des Verschlusszustandes angeordnet und das Verfahren der Versorgungskonsole (5) von einem Signal des ersten Sensors (6) ausgelöst ist.

2. Kupplungsassistent nach Anspruch 1, **dadurch gekennzeichnet, dass** der erste Sensor (6) in oder in räumlicher Nähe zu einer Sattelkupplung (2) des ersten Fahrzeugs (3) angeordnet ist.

3. Kupplungsassistent nach Anspruch 2, **dadurch gekennzeichnet, dass** der erste Sensor (6) die Annäherung und/oder den Kontakt eines Königszapfens (7) des zweiten Fahrzeugs (4) mit der Sattelkupplung (2) detektiert.

4. Kupplungsassistent nach Anspruch 2, **dadurch gekennzeichnet, dass** der erste Sensor (6) die Stellung einer Verschlussmechanik (8) der Sattelkupplung (2) detektiert.

5. Kupplungsassistent nach einem der Ansprüche 1 bis 4, **dadurch gekennzeichnet, dass** die Fahrstellung (A) und/oder Bedienstellung (B) der Versorgungskonsole (5) über mindestens einen Positionssensor (9) detektiert ist.

6. Kupplungsassistent nach einem der Ansprüche 2 bis 5, **dadurch gekennzeichnet, dass** auf dem ersten Fahrzeug (3) ein zweiter Sensor (12) angeordnet ist, welcher die Annäherung und/oder den Kontakt der Sattelkupplung (2) mit einer Aufliegerplatte (13) eines Aufliegers (4) detektiert.

7. Kupplungsassistent nach einem der Ansprüche 1 bis 6, **dadurch gekennzeichnet, dass** der Verbindungszustand der mindestens einen Versorgungsleitung (1) mit einem dritten Sensor (20) detektiert ist.

8. Kupplungsassistent nach einem der Ansprüche 1 bis 7, **dadurch gekennzeichnet, dass** das erste Fahrzeug (3) mindestens einen motorisch verfahrbaren Windabweiser (16) aufweist, dessen Stellung mit einem vierten Sensor (21) detektiert ist.

9. Kupplungsassistent nach einem der Ansprüche 1 bis 8, **dadurch gekennzeichnet, dass** das erste Fahrzeug (3) eine Ablagekonsole (17) zum Anstecken der mindestens einen Versorgungsleitung (1) aufweist, welche mit einem fünften Sensor (22) detektiert ist.

10. Kupplungsassistent nach einem der Ansprüche 1 bis 9, **dadurch gekennzeichnet, dass** das zweite Fahrzeug (4) Stützwinden (18) aufweist, deren Ausfahrzustand mit einem sechsten Sensor (23) detektiert sind.

11. Kupplungsassistent nach einem der Ansprüche 1 bis 10, **dadurch gekennzeichnet, dass** auf dem ersten Fahrzeug (3) eine Sattelkupplung (2) auf einer Verschiebeeinrichtung (19) angeordnet ist, wobei die Position der Sattelkupplung (2) auf der Verschiebeeinrichtung (19) mit einem siebten Sensor (24) detektiert ist.

12. Kupplungsassistent nach einem der Ansprüche 1 bis 11, **dadurch gekennzeichnet, dass** auf dem ersten Fahrzeug (3) ein Steuergerät (10) angeordnet ist, welches mit mindestens einem der Sensoren (6, 9,' 12, 20, 21, 22, 23, 24) verbunden ist und deren jeweiligen Signale verarbeitet.

13. Kupplungsassistent nach Anspruch 12, **dadurch gekennzeichnet, dass** das Steuergerät (10) den Antrieb (11) der Versorgungskonsole (5) steuert.

14. Kupplungsassistent nach Anspruch 12 oder 13, **dadurch gekennzeichnet, dass** das Steuergerät (10) das Öffnen der Kupplung (2) steuert.

15. Kupplungsassistent nach einem der Ansprüche 12 bis 14, **dadurch gekennzeichnet, dass** das Steuergerät (10) ein Geschwindigkeitssignal des ersten Fahrzeugs (3) verarbeitet.

16. Kupplungsassistent nach einem der Ansprüche 12 bis 15, **dadurch gekennzeichnet, dass** das Steuergerät (10) ein Signal der Bremse (14a, 14b) des ersten Fahrzeugs (3) und/oder zweiten Fahrzeugs (4) verarbeitet.

## Claims

1. Auxiliary coupling means for connecting at least one supply line (1) between a first vehicle and a second vehicle (3, 4) which can be coupled thereto by means of a coupling (2), comprising a supply console (5) which is arranged on the second vehicle (4) for attaching the at least one supply line (1), which supply console (5) can be moved by means of a drive (11) out of a travel position (A) which is in the longitudinal axis of the vehicle into an operating position (B) which is located laterally relative thereto, **characterised in that** at least a first sensor (6) for detecting the closure state is arranged on the coupling (2) and the movement of the supply console (5) is triggered by a signal from the first sensor (6).

2. Auxiliary coupling means according to claim 1, **characterised in that** the first sensor (6) is arranged in or in spatial proximity to a fifth wheel (2) of the first vehicle (3).

3. Auxiliary coupling means according to claim 2, **characterised in that** the first sensor (6) detects the approach and/or contact of a kingpin (7) of the second vehicle (4) with respect to the fifth wheel (2).

4. Auxiliary coupling means according to claim 2, **characterised in that** the first sensor (6) detects the position of a closure mechanism (8) of the fifth wheel (2).

5. Auxiliary coupling means according to any one of claims 1 to 4, **characterised in that** the travel position (A) and/or operating position (B) of the supply console (5) is detected by means of at least one position sensor (9).

6. Auxiliary coupling means according to any one of claims 2 to 5, **characterised in that** there is arranged on the first vehicle (3) a second sensor (12) which detects the approach and/or contact of the fifth wheel (2) with respect to a semitrailer baseplate (13) of a semitrailer (4).

7. Auxiliary coupling means according to any one of claims 1 to 6, **characterised in that** the connection state of the at least one supply line (1) is detected with a third sensor (20).

8. Auxiliary coupling means according to any one of claims 1 to 7, **characterised in that** the first vehicle (3) has at least one wind deflector (16) which can be moved by motorised means and whose position is detected with a fourth sensor (21).

9. Auxiliary coupling means according to any one of claims 1 to 8, **characterised in that** the first vehicle (3) has a deposit console (17) for attaching the at least one supply line (1), which deposit console (17) is detected with a fifth sensor (22).

10. Auxiliary coupling means according to any one of claims 1 to 9, **characterised in that** the second vehicle (4) has support actuators (18) whose extension state is detected with a sixth sensor (23).

11. Auxiliary coupling means according to any one of claims 1 to 10, **characterised in that** a fifth wheel (2) is arranged on the first vehicle (3) on a displacement device (19), with the position of the fifth wheel (2) on the displacement device (19) being detected with a seventh sensor (24).

12. Auxiliary coupling means according to any one of claims 1 to 11, **characterised in that** there is arranged on the first vehicle (3) a control device (10) which is connected to at least one of the sensors (6, 9, 12, 20, 21, 22, 23, 24) and processes the signals thereof.

13. Auxiliary coupling means according to claim 12, **characterised in that** the control device (10) controls the drive (11) of the supply console (5).

14. Auxiliary coupling means according to claim 12 or claim 13, **characterised in that** the control device (10) controls the opening of the coupling (2).

15. Auxiliary coupling means according to any one of claims 12 to 14, **characterised in that** the control device (10) processes a speed signal from the first vehicle (3).

16. Auxiliary coupling means according to any one of claims 12 to 15, **characterised in that** the control device (10) processes a signal from the brake (14a, 14b) of the first vehicle (3) and/or second vehicle (4).

## Revendications

1. Dispositif d'aide au couplage pour connecter au moins une ligne d'alimentation (1) entre un premier véhicule et un deuxième véhicule (3, 4) pouvant être couplé au premier véhicule via un dispositif d'accouplement (2), comportant un boîtier d'alimentation (5) disposé sur le deuxième véhicule (4) pour la connexion de cette au moins une ligne d'alimentation (1), lequel boîtier d'alimentation (5) peut se déplacer à l'aide d'un mécanisme de commande (11) d'une position de conduite (A) se trouvant dans l'axe longitudinal du véhicule à une position de manoeuvre (B) située latéralement par rapport à celle-ci, **caractérisé en ce que** au moins un premier capteur (6) pour la détection de l'état de fermeture est disposé sur le dispositif d'accouplement (2) et **en ce que** le déplacement du boîtier d'alimentation (5) est déclenché par un signal du premier capteur (6).

2. Dispositif d'aide au couplage selon la revendication 1, **caractérisé en ce que** le premier capteur (6) est disposé dans une sellette d'attelage (2) du premier véhicule (3) ou à proximité géographique de celle-ci.

3. Dispositif d'aide au couplage selon la revendication 2, **caractérisé en ce que** le premier capteur (6) détecte le rapprochement et/ou le contact entre un pivot central (7) du deuxième véhicule (4) et la sellette d'attelage (2).

4. Dispositif d'aide au couplage selon la revendication 2, **caractérisé en ce que** le premier capteur (6) détecte la position d'un mécanisme de fermeture (8) de la sellette d'attelage (2).

5. Dispositif d'aide au couplage selon l'une quelconque des revendications 1 à 4, **caractérisé en ce que** la position de conduite (A) et/ou la position de manoeuvre (B) du boîtier d'alimentation (5) est détectée à l'aide d'au moins un capteur de position (9).

6. Dispositif d'aide au couplage selon l'une quelconque des revendications 2 à 5, **caractérisé en ce qu'**un deuxième capteur (12) est disposé sur le premier véhicule (3), lequel capteur détecte le rapprochement et/ou le contact entre la sellette d'attelage (2) et une plaque de semi-remorque (13) d'un semi-remorque (4).

7. Dispositif d'aide au couplage selon l'une quelconque des revendications 1 à 6, **caractérisé en ce que** l'état de connexion de cette au moins une ligne d'alimentation (1) est détecté à l'aide d'un troisième capteur (20).

8. Dispositif d'aide au couplage selon l'une quelconque des revendications 1 à 7, **caractérisé en ce que** le premier véhicule (3) présente au moins un déflecteur (16) pouvant être déplacé de manière motorisée, dont la position est détectée avec un quatrième capteur (21).

9. Dispositif d'aide au couplage selon l'une quelconque des revendications 1 à 8, **caractérisé en ce que** le premier véhicule (3) présente un boîtier récepteur (17) pour brancher cette au moins une ligne d'alimentation (1), lequel est détecté avec un cinquième capteur (22).

10. Dispositif d'aide au couplage selon l'une quelconque des revendications 1 à 9, **caractérisé en ce que** le deuxième véhicule (4) présente des crics de support (18) dont l'état de déploiement est détecté à l'aide d'un sixième capteur (23).

11. Dispositif d'aide au couplage selon l'une quelconque des revendications 1 à 10, **caractérisé en ce que** sur le premier véhicule (3), une sellette d'attelage (2) est disposée sur un dispositif coulissant (19), la position de la sellette d'attelage (2) sur le dispositif coulissant (19) étant détectée avec un septième capteur (24).

12. Dispositif d'aide au couplage selon l'une quelconque des revendications 1 à 11, **caractérisé en ce que** sur le premier véhicule (3), un appareil de commande (10) est disposé, lequel est relié à au moins l'un des capteurs (6, 9, 12, 20, 21, 22, 23, 24) et lequel traite les signaux respectifs de ceux-ci.

13. Dispositif d'aide au couplage selon la revendication 12, **caractérisé en ce que** l'appareil de commande (10) gère le mécanisme de commande (11) du boîtier d'alimentation (5).

14. Dispositif d'aide au couplage selon la revendication 12 ou 13, **caractérisé en ce que** l'appareil de commande (10) règle l'ouverture du dispositif d'accouplement (2).

15. Dispositif d'aide au couplage selon l'une quelconque des revendications 12 à 14, **caractérisé en ce que** l'appareil de commande (10) traite un signal de vitesse du premier véhicule (3).

16. Dispositif d'aide au couplage selon l'une quelconque des revendications 12 à 15, **caractérisé en ce que** l'appareil de commande (10) traite un signal du frein (14a, 14b) du premier véhicule (3) et/ou du deuxième véhicule (4).
